Europäisches Patentamt

European Patent Office

Office européen des brevets

(11) Publication number: **0 235 787 B1**

# EUROPEAN PATENT SPECIFICATION

(45) Date of publication of patent specification: **27.05.92** (51) Int. Cl.⁵: **A01F  15/07**

(21) Application number: **87102942.7**

(22) Date of filing: **02.03.87**

(54) Machine for forming cylindrical bales of crop.

(30) Priority: **05.03.86 GB 8605467**
**05.02.87 GB 8702596**

(43) Date of publication of application:
**09.09.87 Bulletin  87/37**

(45) Publication of the grant of the patent:
**27.05.92 Bulletin  92/22**

(84) Designated Contracting States:
**DE ES FR GB IT NL**

(56) References cited:
| | |
|---|---|
| EP-A- 0 120 545 | EP-A- 0 125 719 |
| EP-A- 0 130 258 | EP-A- 0 130 858 |
| DE-A- 3 418 681 | FR-A- 2 511 838 |
| GB-A- 2 090 560 | GB-A- 2 128 542 |
| US-A- 3 992 987 | US-A- 4 273 036 |

(73) Proprietor: **DEERE & COMPANY**
**1 John Deere Road**
**Moline, Illinois 61265(US)**

(72) Inventor: **Frerich, Josef**
**Flurstrasse 6**
**W-6661 Dietrichingen(DE)**

(74) Representative: **Feldmann, Bernhard et al**
**DEERE & COMPANY European Office Patent**
**Department Steubenstrasse 36-42 Postfach**
**100862**
**W-6800 Mannheim 1(DE)**

Rank Xerox (UK) Business Services

## Description

This invention relates to a baling machine for forming round bales of crop as set forth in the opening paragraph of claim 1.

Machines, towed by a tractor, for forming large cylindrical bales of crop, e.g. hay, are well known. They are usually called round balers and as the machine advances, the crop is removed from a windrow by a pick-up mechanism and delivered rearwardly to a baling chamber where it is rolled into a bale.

There are basically two forms of such machines, namely those with a fixed volume baling chamber (DE-A1-3 418 681) forming bales with a soft core and a hard outer shell and those with an expanding baling chamber (EP-A1-0 130 858) forming bales with a hard core and a relatively uniform density throughout. Soft core bales have the advantage that they suffer only minimal rotting of the core even if moist material is baled. However, they tend to collapse when stored. Pressing of the bale only starts when the baling chamber is completely filled with crop. When the pressing starts the power requirement increases rapidly. Hard core bales have the advantage that they do not collapse when stored even for extended periods of time. However, they have core rotting problems.

The baling machine (EP-A2-0 120 545) from which the invention starts is a combination of the two basic types of round balers and has a baling chamber with a forward part on a main frame defined by fixed position rolls which lie in an arc in contact with their neighbours. The rearward part of the baling chamber is defined by chain and slat conveyors which can be replaced by belts and which are movably supported on guide rolls including a drive roll all rotatably mounted on a rearwardly and upwardly swingable gate. The gate is pivotally connected to the main frame. The run of the conveyors forming the rear wall of the bale starting chamber is vertically directed and starting of a bale is difficult as the incoming crop does not tend to rotate.

The tensioning mechanism of this baling machine is provided with several belt take-up rolls which when the baling chamber is in its form for a full size bale become conveyor guide rolls with the disadvantage that material can also wrap up here.

The present invention provides a baling machine which can produce soft core bales in a variable volume chamber and minimizes or eliminates the problems of the belt section of the prior art machines. Desirably this baling machine can be equipped very simply with apparatus for wrapping the bale with sheet or net.

According to the present invention the drive roll is mounted between the side walls on the main frame such that the baling chamber limiting runs extend upwardly and forwardly from the lower, gate mounted, position-fixed belt roll to the drive roll when the baling chamber is empty and that the belt tensioning mechanism comprises a single belt take-up roll not being a belt roll defining the baling chamber.

Desirably the fixed-position rolls too are driven.

Preferably the belt or belts are disposed so that at the start of baling their run, limiting the baling chamber, can be at an angle of up to 40° to the vertical, for example of 3° to 10°.

The fixed-position rolls are preferably disposed in an arc subtending an angle in the range 60° to 160° at the centre of the baling chamber when in its form for a full size bale. The lowermost roll in the arc is desirably at an angle in the range 10° to 50° to a vertical line through the centre.

An embodiment of the invention will now be described with reference to the accompanying diagrammatic drawings in which:

Fig. 1    shows the right hand side, considered when facing in the direction of travel, of a machine for forming large cylindrical bales of hay in its condition at the start of baling;

Fig. 2    shows the machine of Fig. 1 at an intermediate stage in bale formation; and

Fig. 3    shows the machine of Fig. 1 at the completion of baling.

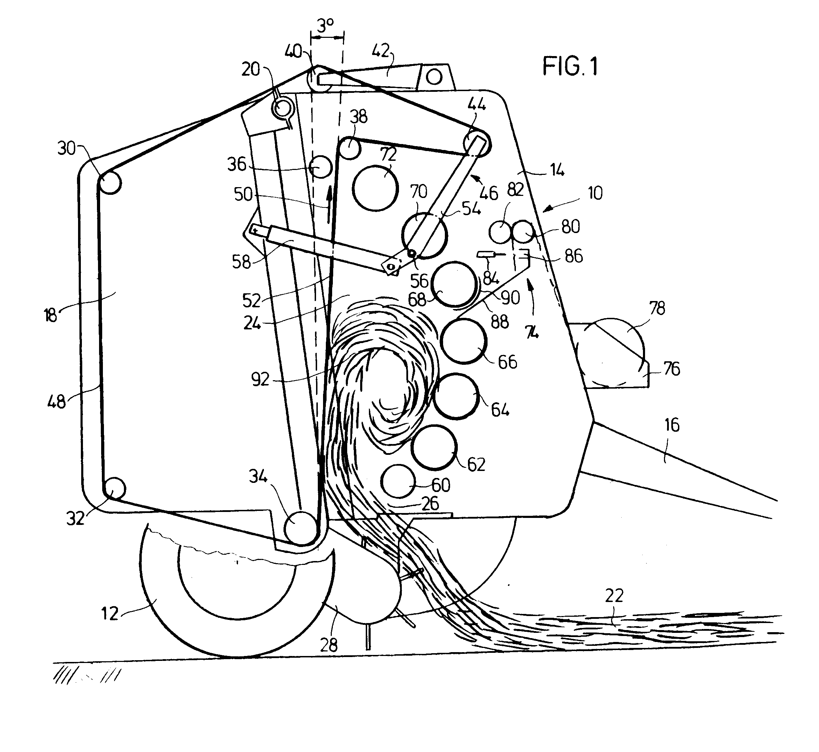

In the drawings, the baler includes a main frame 10 mounted on a pair of wheels of which only the right hand wheel 12 is shown. The main frame has an upright fore-and-aft extending wall 14 on either side connected by transverse beams (not shown). A draft tongue 16 is connected to a transverse beam at the front of the frame 10 and extends forwardly for attaching the baler to a tractor (also not shown) which draws the machine. The rear half of the baler is in the form of a gate 18 swingable upwardly and rearwardly, from its position in Fig. 1 at the start of baling, about a gate pivot shaft 20 at the top of the baler. Hay lying in a windrow 22 is fed to a baling chamber 24 through its lateral throat 26 at the middle portion of the underside of the machine by a pick-up 28 located below the machine. As described thus far the machine is conventional.

A plurality of lateral belt-rolls extends over the width of the machine. Of these, rolls 30, 32, 34 are mounted on the gate 18, rolls 36, 38 on the side walls 14, and roll 40 on a top arm 42, and a single roll 44 forms part of a belt take-up and tensioning mechanism 46. The roll 38 is connected to a drive (not shown).

Six rubber belts 48 are trained side-by-side over the rolls (with the initial exception of the roll 36) and move in an anti-clockwise direction as indicated by arrow 50. Run 52 of the belts 48 between the rolls 34 and 38 (in Fig. 1) provides the rear wall of the baling chamber 24, and the run is inclined upwardly and forwardly at an angle of 3° to the vertical. Tension in the belts is maintained by the mechanism 46 which includes an upwardly extending idler arm 54 swingable about a pivot shaft 56 in its lower portion and pivotally connected at its lower end to the cylinder of a piston and cylinder unit 58 which in turn is pivotally connected at its piston end to the gate 18. An identical idler arm 54 and piston and cylinder unit 58 can be provided at either side of the machine. The roll 44 is in that event mounted between the upper ends of the two idler arms 54. This roll 44 does not constitute a belt roll defining the baling chamber 24, but rather it is disposed well away from the chamber and is above it.

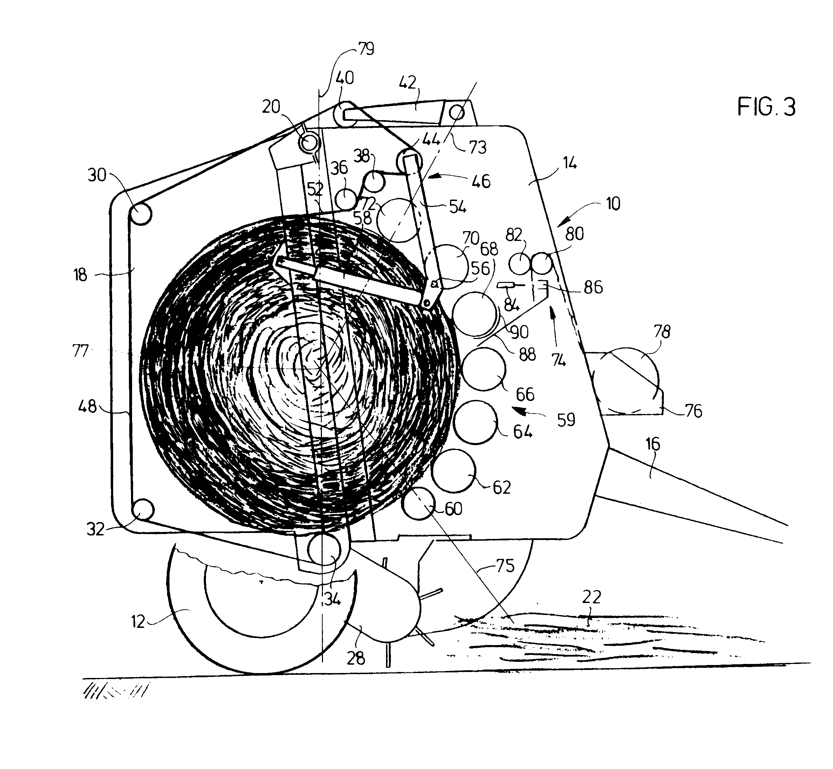

The forward wall of the baling chamber 24 is formed by an upstanding arcuate array 59 of fixed-position rolls 60, 62, 64, 66, 68, 70 and 72 mounted in the forward portion of the machine, the lowest roll of which, the roll 60, being of somewhat smaller diameter than the other rolls. The arc subtends an angle of 113° (between lines 73, 75) at the centre 77 of the baling chamber 24 when in its form for a full size bale as in Fig. 3. The lowermost roll 60 of the array 59 is at an angle of 37° to a vertical line 79 through the centre (i.e. the angle between the lines 75 and 79). The fixed-position rolls are all driven in a clockwise direction.

A net-wrapping apparatus 74 is disposed at the front of the baler. It has a support in the form of a trough 76, across the width of the front of the machine, which contains a roll 78 of net (or sheet) which passes upwardly initially and then over a forward roll of a pair of side-by-side feed rolls 80, 82 into the nip between the feed rolls. Thence the net passes downwardly between a knife 84 and its associated abutment 86 to a guide plate 88 which leads the net between the fixed-position rolls 66, 68, the roll 68 having an arcuate shield 90 on its underside.

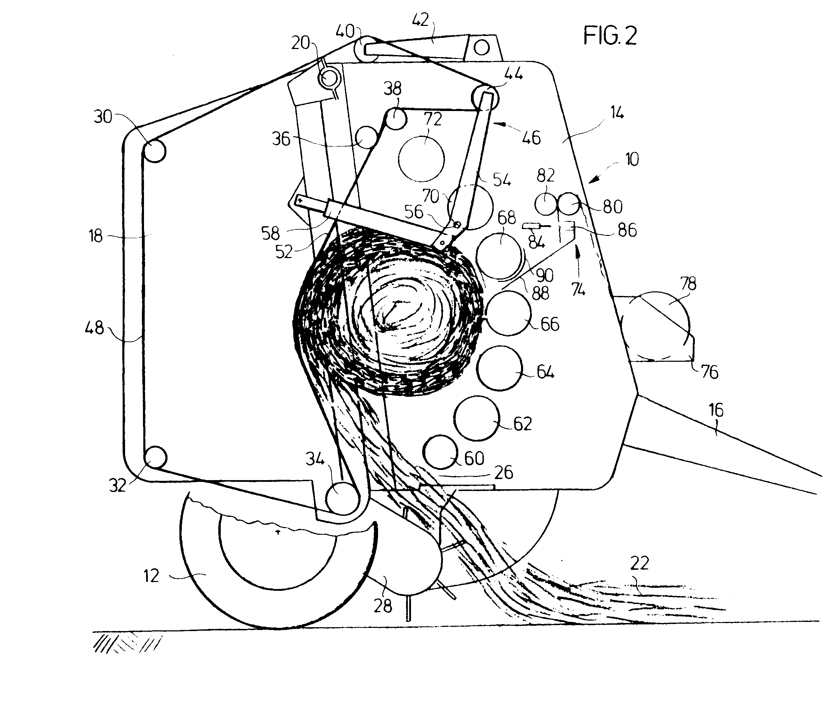

In operation, when hay lying in the windrow 22 is conveyed to the baling chamber by the pick-up 28 through the throat 26 between the belts 48 and the array 59 of fixed-position rolls, the oppositely moving belt run 52 and the fixed-position rolls cause the crop to turn clockwise upon itself (as viewed in Fig. 1) so that it becomes wound up into a cylindrical soft bale core 92 of increasing size which eventually overcomes the tension in the belts thereupon causing the idler arm 54 to swing anti-clockwise (Fig. 2) against the loading provided by the piston and cylinder unit 58, and the belts 48 contact the roll 36. The force needed to deflect the belt initially is relatively low due to the design of the tensioning mechanism 46, but increases as the bale enlarges. Thus this assists the formation of a bale with a soft core. The bale continues to grow in size until the position of the idler arm 54 shown in Fig. 3 is reached. When the density of the outer layers of the bale is sufficiently high the pick-up 28 is stopped and the completed bale is wrapped with net, the tractor being stationary. The net is advanced by the feed rolls 80, 82 over the guide plate 88 and into the baling chamber 24. The bale at this time is still being turned by the belts 48 and the fixed-position rolls, and is caused to complete almost a further turn when the knife 84 is operated to sever the net, and the free end thereof finally passes into the chamber overlying the initial wrap of netting.

With the bale now secured by the net the drive to the belts 48 and fixed-position rolls is cut, the gate 18 is opened using the piston and cylinder units 58 on either side of the machine, and the bale is deposited on the ground. The gate 18 is closed and the tractor then resumes its course along the windrow with the pick-up 28 once more in operation.

## Claims

1. A baling machine for forming cylindrical bales of crop comprising
   - a main frame (10) with upright fore-and-aft extending walls (14) on either side,
   - an upwardly and rearwardly swingable gate (18) pivotally connected to the main frame (10),
   - a set of fixed-position rolls (60, 62, 64, 66, 68, 70 and 72) mounted on the main frame (10) and disposed in an arc,
   - a series of driven belts (48) trained about position-fixed belt rolls (30, 32, 34, and 40) and a drive roll (38) mounted on an upper portion of the machine and
   - a belt tensioning mechanism (46),
   wherein the fixed-position rolls (60, 62, 64, 66, 68, 70 and 72) and the belts (48) define a baling chamber (24) which can be fed with crop on its underside between the belts (48) and the fixed-position rolls (60, 62, 64, 66, 68, 70 and 72), in which the belts (48) can move outwardly to accommodate a bale as it grows in size and in which the belts (48) are disposed so that at the start of baling they limit the bale chamber (24) and have an upwardly extending straight-line run (52) only trained about said drive roll (38) and a position-fixed belt roll (34) mounted at the lower forward edge of the gate (18) characterised in that the drive roll (38) is mounted between the side walls (14) on the main frame (10) such that the baling chamber (24) limiting runs (52) extend upwardly and forwardly from the lower, gate (18) mounted, position-fixed belt roll (34) to the drive roll (38) when the baling chamber (24) is empty and that the belt tensioning mechanism (46) comprises a single belt take-up roll (44) not being a belt roll defining the baling chamber (24).

2.  A baling machine according to claim 1 characterised in that the fixed-position rolls (62, 64, 66, 68, 70 72) are driven.

3.  A baling machine according to claim 1 characterised in that the run (52) is at an angle of up to 40° to the vertical.

4.  A baling machine according to claim 3 characterised in that the angle is in the range 3° to 10°.

5.  A baling machine according to claim 4 characterised in that the angle is 3°.

6.  A baling machine according to claim 1 characterised in that the arc of the fixed-position rolls (60, 62, 64, 66, 68, 70, 72), subtends an angle in the range 60° to 160° at the centre (77) of the baling chamber (24) when in its form for a full size bale.

7.  A baling machine according to claim 1 characterised in that the lowermost roll (60) of the set of rolls is at an angle in the range 10° to 50° to a vertical line (79) through the said centre (77).

8.  A baling machine according to any preceding claim characterised in that the belt tensioning mechanism (46) includes an arm (54) pivotally mounted intermediate its ends, the single belt take-up roll (44) over which the belts (48) are trained mounted on the arm (54) at one side of its pivot (56) and an arm loading device (58) connected to the other side of the pivot (56).

9.  A baling machine according to claim 8 characterised in that the belt take-up roll (44) is disposed above the said pivot (56) and the baling chamber (24).

10.  A baling machine according to claim 8 characterised in that the loading device for the arm (54) comprises a piston and cylinder unit (58) pivotally connected between the arm (54) and gate (18).

11.  A baling machine according to any preceding claim characterised in that the machine includes a net-wrapping apparatus (74) comprising a support (76) for a roll of sheet or net (78), a pair of sheet or net feed rolls (80, 82), a knife mechanism (84, 86) for shearing the sheet or net (78) downstream of the feed rolls (80, 82), and a guide plate (88) for the sheet or net (78) between the knife mechanism (84, 86) and a neighbouring pair of the fixed-position rolls (66, 68).

12.  A baling machine according to claim 11 characterised in that the support is a trough container (76) for receiving the roll of sheet or net (78).

**Revendications**

1.  Machine de formation de balles, pour former des balles cylindriques de matière récoltée, comprenant :

    un châssis principal (10) comportant des parois verticales avant-arrière (14) de chaque côté,

    une porte (18) pouvant pivoter vers le haut et vers l'arrière reliée de façon pivotante au châssis principal (10),

    une série de rouleaux en position fixe (60,62, 64,66,68,70 et 72) montés sur le châssis principal (10) et disposés suivant un arc,

    une série de courroies entraînées (48) qui passent autour de rouleaux de courroie fixés en position (30,32,34 et 40)et d'un rouleau d'entraînement (38) monté sur une partie supérieure de la machine, et

    un mécanisme de tension de courroie (46), dans laquelle les rouleaux en position fixe (60 , 62, 64, 66, 68, 70 et 72) et les courroies (48) définissent une chambre de formation de balle (24) qui peut être alimentée en matière récoltée par sa face inférieure entre les courroies (48) et les rouleaux en position fixe (60, 62, 64, 66, 68, 70 et 72), dans laquelle les courroies (48) peuvent se déplacer vers l'extérieur pour s'adapter à une balle au fur et à mesure du grossissement de celle-ci, et dans laquelle les courroies (48) sont disposées de sorte que, au début de la formation d'une balle, elles limitent la chambre à balle (24) et présentent un brin rectiligne s'étendant vers le haut (52) qui passe seulement autour dudit rouleau d'entraînement (38) et d'un rouleau de courroie fixé en position (34) monté au bord inférieur avant de la porte (18),

    caractérisée en ce que le rouleau d'entraînement (38) est monté entre les parois latérales (14) sur le châssis principal (10) de sorte que les brins (52) limitant la chambre de formation de balle (24) s'étendent vers le haut et vers l'avant, à partir du rouleau de courroie inférieur fixé en position (34), monté sur la porte (10), jusqu'au rouleau d'entraînement (38)lorsque la chambre de formation de balle (24) est vide, et en ce que le mécanisme de tension de courroie (46) comprend un rouleau unique de reprise de courroie (44) qui n'est pas un rouleau de courroie définissant la chambre de formation de balle (24).

2. Machine de formation de balles suivant la revendication 1, caractérisée en ce que les rouleaux en position fixe (62,64,66,68,70,72) sont entraînés.

3. Machine de formation de balles suivant la revendication 1, caractérisée en ce que le brin (52) est disposé suivant un angle qui peut atteindre 40° par rapport à la verticale.

4. Machine de formation de balles suivant la revendication 3, caractérisée en ce que l'angle est compris entre 3° et 10°.

5. Machine de formation de balles suivant la revendication 4, caractérisée en ce que l'angle est de 3°.

6. Machine de formation de balles suivant la revendication 1, caractérisée en ce que l'arc des rouleaux enposition fixe (60, 62, 64, 66, 68, 70 et 72) soustend un angle compris entre 60° et 160° au centre (77) de la chambre de formation de balle (24) lorsque celle-ci est dans sa forme correspondant à une balle de dimension totale.

7. Machine de formation de balles suivant la revendication 1,caractérisée en ce que le rouleau inférieur (60) de lasérie de rouleaux est placé à un angle compris entre 10° et 50° par rapport à une ligne verticale (79) passant par ledit centre (77).

8. Machine de formation de balles suivant l'une quelconque des revendications précédentes, caractérisée en ce que le mécanisme de tension de courroie (46) comprend un bras (54) monté de façon pivotante entre ses extrémités, le rouleau unique de reprise de courroie (44) sur lequel passent les courroies (48) monté sur le bras (54) d'un côté de son pivot (56), et un dispositif de sollicitation du bras (58) connecté de l'autre côté du pivot (56).

9. Machine de formation de balles suivant la revendication 8, caractérisée en ce que le rouleau de reprise de courroie (44) est disposé au-dessus dudit pivot (56) et de la chambre de formation de balle (24).

10. Machine de formation de balles suivant la revendication 8, caractérisée en ce que le dispositif de sollicitation du bras (54) comprend un groupe à piston et cylindre (58) connecté de façon pivotante entre le bras (54) et la porte (18).

11. Machine de formation de balles suivant l'une quelconque des revendications précédentes, caractérisée en ce que la machine comprend un appareil d'enveloppement par filet (74) comportant un support (76) pour une bobine de feuille ou de filet (78), une paire de rouleaux de distribution de feuille ou de filet (80,82), un mécanisme de coupe (84,86) pour cisailler la feuille ou le filet (78) en aval des rouleaux de distribution (80,82), et une plaque de guidage (88) pour la feuille ou le filet (78) placée entre le mécanisme de coupe (84, 86) et une paire voisine des rouleaux en position fixe (66,68).

12. Machine de formation de balles suivant la revendication 11, caractérisée en ce que le support est une auge (76) de réception de la bobine de feuille ou filet (78).

## Patentansprüche

1. Ballenformmaschine zum Bilden von zylindrischen Ballen aus Erntegut, mit
   - einem Hauptrahmen (10) mit aufrechten, sich längs erstreckenden Wänden (14) auf jeder Seite;
   - einem nach oben und nach rückwärts schwenkbaren Gatter (18), das mit dem Hauptrahmen (10) schwenkbar verbunden ist;
   - einem Satz von ortsfesten Rollen (60, 62, 64, 66, 68, 70 und 72), die am Hauptrahmen montiert und in einem Bogen angeordnet sind;
   - einer Reihe von angetriebenen Riemen (48), die über ortsfeste Riemenrollen (30, 32, 34 und 40) und über eine Antriebsrolle (38) geführt sind, die an einem oberen Abschnitt der Maschine montiert ist, und
   - einer Riemenspanneinrichtung (46),
   wobei die ortsfesten Rollen (60, 62, 64, 66, 68, 70 und 72) und die Riemen (48) eine Ballenformkammer (24) definieren, der auf ihrer Unterseite Erntegut zwischen den Riemen (48) und den ortsfesten Rollen (60, 62, 64, 66, 68, 70 und 72) zugeführt werden kann, in der die Riemen (48) sich nach außen bewegen können, um sich dem in der Größe zunehmenden Ballen anpassen zu können, und in der die Riemen (48) so angeordnet sind, daß sie bei Beginn des Ballenformvorganges die Ballenformkammer (24) begrenzen und ein sich nach oben erstreckendes gerades Trum (52) aufweisen, das nur um die genannte Antriebsrolle (38) und eine ortsfeste Riemenrolle (34) geführt ist, die an der unteren vorderen Kante des Gatters (18) angeordnet ist, dadurch gekennzeichnet, daß die Antriebsrolle (38) zwischen den Seitenwänden (14) am Hauptrahmen (10) derart montiert ist, daß die die Ballenformkammer (24) begrenzenden Trums (52) sich von der unteren, am Gatter (18) angeordneten, ortsfesten Riemenrolle (34) nach oben nach vorne zu der Antriebsrolle (38) erstrecken, wenn die Ballenformkammer (24) leer ist, und daß die Riemenspanneinrichtung (46) eine einzige Riemenspannrolle (44) aufweist, die keine die Ballenformkammer (24) definierende Riemenrolle ist.

2.  Ballenformmaschine nach Anspruch 1, dadurch gekennzeichnet, daß die ortsfesten Rollen (62, 64, 66, 68, 70, 72) angetrieben sind.

3.  Ballenformmaschine nach Anspruch 1, dadurch gekennzeichnet, daß das Trum (52) zur Vertikalen in einem Winkel bis zu 40° angeordnet ist.

4.  Ballenformmaschine nach Anspruch 3, dadurch gekennzeichnet, daß der Winkel im Bereich zwischen 3° bis 10° liegt.

5.  Ballenformmaschine nach Anspruch 4, dadurch gekennzeichnet, daß der Winkel 3° beträgt.

6.  Ballenformmaschine nach Anspruch 1, dadurch gekennzeichnet, daß der Bogen der ortsfesten Rollen (60, 62, 64, 66, 68, 70, 72) mit dem Zentrum (77) der Ballenformkammer, wenn sie sich in einer der vollen Größe eines Ballens entsprechenden Form befindet, einen Winkel im Bereich zwischen 60° bis 160° einnimmt.

7.  Ballenformmaschine nach Anspruch 1, dadurch gekennzeichnet, daß die unterste Rolle (60) des Rollensatzes zu einer senkrechten Linie (79) durch das genannte Zentrum (77) in einem Winkel von 10° bis 50° angeordnet ist.

8.  Ballenformmaschine nach irgendeinem der voranstehenden Ansprüche, dadurch gekennzeichnet, daß die Riemenspanneinrichtung (46) einen Arm (54), der zwischen seinen Enden schwenkbar gelagert ist, die einzige Riemenspannrolle (44), über welche die Riemen (48) geführt sind und die an dem Arm (54) auf einer Seite seines Schwenkpunktes (56) montiert ist, und eine den Arm vorspannende Vorrichtung (58) aufweist, die mit auf der anderen Seite des Schwenkpuntes (56) liegenden Armseite verbunden ist.

9.  Ballenformmaschine nach Anspruch 8, dadurch gekennzeichnet, daß die Riemenspannrolle (44) oberhalb des genannten Schwenkpunktes (56) und oberhalb der Ballenformkammer (24) angeordnet ist.

10. Ballenformmaschine nach Anspruch 8, dadurch gekennzeichnet, daß die Vorspanneinrichtung für den Arm (54) eine Kolben/Zylinder-Einheit (58) aufweist, die zwischen dem Arm (54) und dem Gatter (18) schwenkbar angeordnet ist.

11. Ballenformmaschine nach irgendeinem der voranstehenden Ansprüche, dadurch gekennzeichnet, daß die Maschine einen Netzwickel-Apparat (74) umfaßt, der eine Stützeinrichtung (76) für eine Rolle (78) eines band- oder netzförmigen Materials, zwei das Band oder das Netz zuführende Rollen (80, 42), einen Messermechanismus (84, 86) zum Abscheren des Bandes oder des Netzes (78) stromabwärts der Zuführungsrollen (80 und 82) sowie eine Führungsplatte (88) für die Bahn oder das Netz (78) zwischen dem Messermechanismus (84, 86) und einem benachbarten Paar von ortsfesten Rollen (66, 68) aufweist.

12. Ballenformmaschine nach Anspruch 11, dadurch gekennzeichnet, daß die Stützeinrichtung ein trogförmiger Behälter (76) zur Aufnahme der Band- oder Netzrolle (78) ist.

FIG.1

EP 0 235 787 B1

FIG.2

FIG. 3

EP 0 235 787 B1